# EUROPÄISCHE PATENTSCHRIFT

(11) **EP 1 123 817 B1**
(45) Veröffentlichungstag und Bekanntmachung des Hinweises auf die Patenterteilung: **31.08.2005**
(21) Anmeldenummer: 01102537.6
(22) Anmeldetag: 06.02.2001
(51) Int. Cl.: B60C 7/14, B60C 7/12, B60C 7/10, B60C 7/28

(54) **Nicht-pneumatischer Reifen und Fahrzeugrad mit einem nicht-pneumatischen Reifen**
Non-pneumatic tire and vehicle wheel with a non-pneumatic tire
Bandage non-pneumatique et roue de véhicule avec un bandage non-pneumatique

(30) Priorität: 10.02.2000 DE 10006069
(43) Veröffentlichungstag der Anmeldung: 16.08.2001
(73) Patentinhaber: Continental Aktiengesellschaft, 30165 Hannover (DE)
(72) Erfinder: Glasewald, Thomas, 30926 Seelze (DE); Szczeszak, Peter, 31275 Lehrte (DE)

(56) Entgegenhaltungen:
- DE-A- 2 456 420
- DE-B- 1 019 578
- DE-B- 1 170 267
- DE-C- 812 513
- US-A- 1 396 984

## Beschreibung

Die Erfindung betrifft einen nicht-pneumatischen Reifen mit einem formstabilen Zwischenring, auf dessen Außenseite ein Laufflächenteil aus einem gummielastischen Material und an dessen Innenseite ein zur Anordnung auf einer Felgenhörner oder dergleichen aufweisenden Felge bestimmtes Federelement, welches ebenfalls aus einem gummielastischen Material besteht, angeordnet ist.

Nicht-pneumatische Reifen sind in verschiedensten Ausführungen schon seit langem bekannt. Sie werden beispielsweise auf zum Transportieren von Lasten vorgesehenen Fahrzeugen eingesetzt, die für einen Betrieb bei geringer Fahrgeschwindigkeiten ausgelegt sind und vor allem zum Transport schwerer Lasten über vergleichsweise kurze Strecken verwendet werden, wobei neben der Beförderung von Lasten selbstverständlich auch Leerfahrten auftreten. Derartige Fahrzeuge sind beispielsweise Gabelstapler. Im Allgemeinen werden auf Gabelstaplern so genannte Elastic- oder Super-Elastic-Reifen verwendet, die Vollgummireifen sind und für einen Sitz auf der Felge des Rades mit Rund- oder Rechteckkernen versehen sind. Diese Kerne bewirken eine lokale Kompression des Gummimaterials im Reifen und somit einen festen Sitz des Reifens auf der Felge nach erfolgter Montage. Die Federkennlinie der als elastisch einfedernde Bauteile betrachtbare Vollgummireifen ist nahezu linear. Vollgummireifen bieten gute Stabilitätseigenschaften aber einen schlechten Fahrkomfort. Bei Luftreifen ist es übrigens umgekehrt, diese bieten einen guten Fahrkomfort bei vergleichsweise schlechter Stabilität bzw. Standsicherheit. Beim Auftreten von Belastungen und Kräften in radialer und axialer Richtung werden bei Vollgummireifen große Elastomermassen verformt, was mit einer beachtlichen Temperaturentwicklung im Reifen und auch mit hohen Rollwiderstandswerten einhergeht. Darüber hinaus treten bei Vollgummireifen oft Abriebsverletzungen im Bereich der Felgenhörner auf, was sich nachteilig auf die Lebensdauer der Reifen und den Energieverbrauch der mit diesen Reifen versehenen Fahrzeuge auswirkt.

Ein Reifen der eingangs genannten Art ist beispielsweise aus der US 1,396,984 A bekannt. Dieser Reifen weist ein stoßabsorbierendes ringförmiges Polsterelement auf, welches sowohl an seiner Innen- als auch an seiner Außenseite mit einer Anzahl von in Umfangsrichtung umlaufenden Nuten versehen ist. Auf dem stoßabsorbierenden Element ist außenseitig ein metallischer Zwischenring befestigt, welche die Verbindung zu einem auf diesem angeordneten großvolumigen Vollgummiteil bildet. Der mit dem Vollgummiteil versehene Zwischenring ist auf einer hier noch aus Holz bestehenden Felge befestigt. In Folge der großen Gummimasse hätte auch dieser Reifen die oben erwähnten Nachteile von Vollgummireifen, insbesondere eine hohe Temperaturentwicklung, einen hohen Rollwiderstand und einen schlechten Fahrkomfort.

Aus der DE 24 56 420 A ist ein gummibereiftes Fahrzeugrad bekannt, welches einen an seitlichen Rändern Wülste aufweisenden Vollgummireifen aufweist, der einen von der Felge begrenzten Einfederungsraum umschließt und an seinen Wülsten von Felgenhömern der Felge gehalten wird, welche mittels Federkraft auf die Wülste wirkend axial spreizbar angeordnet sind. Die mit den Wülsten versehene Reifenkarkasse ist einteilig mit dem Laufring ausgeführt, welcher ähnlich einem Gürtel mit Festigkeitsträgern verstärkt ist. Der aus DE 11 70 267 B bekannte Vollreifen besteht aus einem Laufring aus Gummi, einem ebenfalls aus elastischem Material bestehenden Dämpfungsring und einem zwischen diesen beiden angeordneten Metallring. Der Dämpfungsring weist im Querschnitt die Gestalt eines im Wesentlichen hoch gestellten Rechtecks auf und ist zwischen den Scheiben des Fahrzeugrades eingeklemmt.

Der Erfindung liegt die Aufgabe zu Grunde, einen nicht-pneumatischen Reifen zur Verfügung zu stellen, welcher bei geringer bis mittelschwerer Last oder bei Leerfahrten vom Federungskomfort einem Luftreifen ähnlich ist, bei schweren Lasten jedoch die erforderliche Kippstabilität des Fahrzeuges sicherstellt und eine geringere Temperaturentwicklung als die üblichen Elastic- und Super-Elastic-Reifen aufweist.

Gelöst wird die gestellte Aufgabe erfindungsgemäß dadurch, dass das Federelement am Zwischenring lediglich mit seinem mittleren Bereich befestigt ist, an welchen seitlich Schulterbereiche anschließen, deren Abstand vom Zwischenring nach außen zu größer wird, sodass ein freier Federweg für den mit dem Laufflächenteil versehenen Zwischenring zur Verfügung gestellt wird, dass das Federelement an seiner Innenseite mittig mit einer radial außerhalb seiner Felgensitzflächen angeordneten und im Querschnitt tunnelförmigen Ausnehmung versehen ist, deren größte radiale Erstreckung zumindest dem freien Federweg entspricht, und dass im Federelement zur radialen Fixierung des Reifens auf der Felge ringartig umlaufende Kernelemente und in den beiden felgenhornnahen Bereichen je ein gegenüber der radialen Richtung schräg nach außen geneigt verlaufendes, länglich ausgeführtes und ringartig umlaufendes Stützelement angeordnet ist.

Ein erfindungsgemäß ausgeführter Reifen weist durch sein in drei Bereichen - zwischen den Schulterbereichen und dem Zwischenring sowie im Bereich der mittigen Ausnehmung - deutlich frei liegendes Federelement eine wesentlich geringere elastomere Masse auf als Vollgummireifen. Beim Betrieb erfindungsgemäßer Reifen ist daher die Temperaturentwicklung im Inneren des Federelements wesentlich geringer als im Inneren von Vollgummireifen. Bei Leerfahrten sowie bei Fahrten mit leichten oder mittelschweren Lasten ist durch den oberhalb der Schulterbereiche zur Verfügung stehenden freien Federweg der Federungskomfort ähnlich einem Luftreifen. Bei schweren Lasten wird dieser freie Federweg schnell ausgeschöpft und das Federelement reagiert gemäß einer Federkennlinie, die stark progressiv ansteigt. Dies erhöht in erwünschter Weise die Kippstabilität des Fahrzeuges. Die im Federelement angeordneten Stützelemente sind in der Lage, die bei Belastungen auftretenden Kräfte sehr gut aufzunehmen und optimal zu verteilen und gestatten eine Einflussnahme auf die Biegesteifigkeit des Federelements.

Bei einer bevorzugten Ausführungsform der Erfindung ist das Federelement über einen Verbindungsring, welcher insbesondere einen T-förmigen Querschnitt aufweist, am Zwischenring angeordnet. Damit wird nicht nur eine entsprechend belastbare Verbindung zwischen diesen Bauteilen hergestellt sondern es besteht dadurch auch die Möglichkeit, den Zwischenring gemeinsam mit dem Laufflächenteil bei Bedarf auszuwechseln.

Dabei wird der Verbindungsring großteils innerhalb des Federelements angeordnet und lediglich das Querteil des T-förmigen Verbindungsringes mit dem Zwischenring, insbesondere formschlüssig, verbunden. Diese Art der Verbindung stellt sicher, dass der erfindungsgemäße Reifen den auftretenden Kräften und Belastungen standhalten kann und somit auch eine hohe Lebensdauer aufweist.

Das Federelement kann auf einfache Weise so gestaltet werden, dass es auf einer Standardfelge angeordnet werden kann. Dazu werden am Federelement an die Schulterbereiche anschließende Seitenflächen und an die mittige Ausnehmung anschließende Felgensitzflächen vorgesehen, wobei zwischen den Seitenflächen und den Felgensitzflächen jeweils eine dem Felgenhorn der Felge angepasste Hornsitzfläche ausgebildet ist.

Um einer unerwünschten Verformung des Federelements und damit einer Generierung von Wärme im Federelement entgegenzuwirken, ist es von Vorteil, wenn die Stützelemente in der Nähe der Hornsitzflächen angeordnet sind.

Ein sicherer Sitz des Federelements an der Felge wird dadurch unterstützt, dass die Kernelemente in der Nähe der Felgensitzflächen verlaufen.

Bei einer bevorzugten Ausführungsform der Erfindung ist das Kernelement mit dem Stützelement einteilig ausgeführt. Diese Maßnahme trägt zu einer Stabilisierung der Lage des Kernelements bei, was für den Fahrkomfort von Vorteil ist.

Die Stützelemente werden insbesondere so ausgeführt, dass sie im Querschnitt langgestreckte Elemente sind. Diese Maßnahme unterstützt, dass die Federkennlinie des Federelements bei schweren Lasten in erwünschter Weise stark progressiv ansteigt.

Bei einer weiteren Ausführungsform der Erfindung sind zumindest die Außenseiten der Stützelemente mit einer Anzahl umlaufender Rillen versehen. Damit können die Biegesteifigkeit der Stützelemente und damit auch die Federkennlinie des Federelements beeinflusst werden.

Eine derartige Einflussnahme ist beispielsweise auch dadurch möglich, dass das Stützelement aus einer Anzahl von Lagen aus Stahlkord besteht.

Fahrzeugräder, die mit erfindungsgemäß ausgeführten nicht-pneumatischen Reifen versehen sind, sind besonders vorteilhaft auf Gabelstaplern und ähnlichen Fahrzeugen einsetzbar. Gerade diese Fahrzeuge werden oft schwer beladen und sollen unter Last kippstabil sein. Bei Leerfahrten soll hingegen ein guter Komfort gewährleistet sein. Erfindungsgemäße Reifen erfüllen diese Anforderungen.

Die Montage eines erfindungsgemäßen nicht-pneumatischen Reifens auf einer Felge wird dann erleichtert, wenn das Federelement einen Snap-In-Tyre-Haltewulst aufweist, welcher in einer an der Felge umlaufenden Nut eingreift.

Weitere Merkmale, Vorteile und Einzelheiten der Erfindung werden nun anhand der Zeichnung, die einige Ausführungsbeispiele eines erfindungsgemäßen Reifens darstellt, näher beschrieben. Die Zeichnungsfiguren sind dabei schematische Darstellungen. Es zeigen
Fig. 1 einen Querschnitt durch eine erste Ausführungsform eines auf einer Felge montierten Reifens und
Fig. 2 bis 4 weitere Ausführungsformen der Erfindung, jeweils anhand eines Querschnittes durch einen felgennahen Teilbereich eines Reifens.

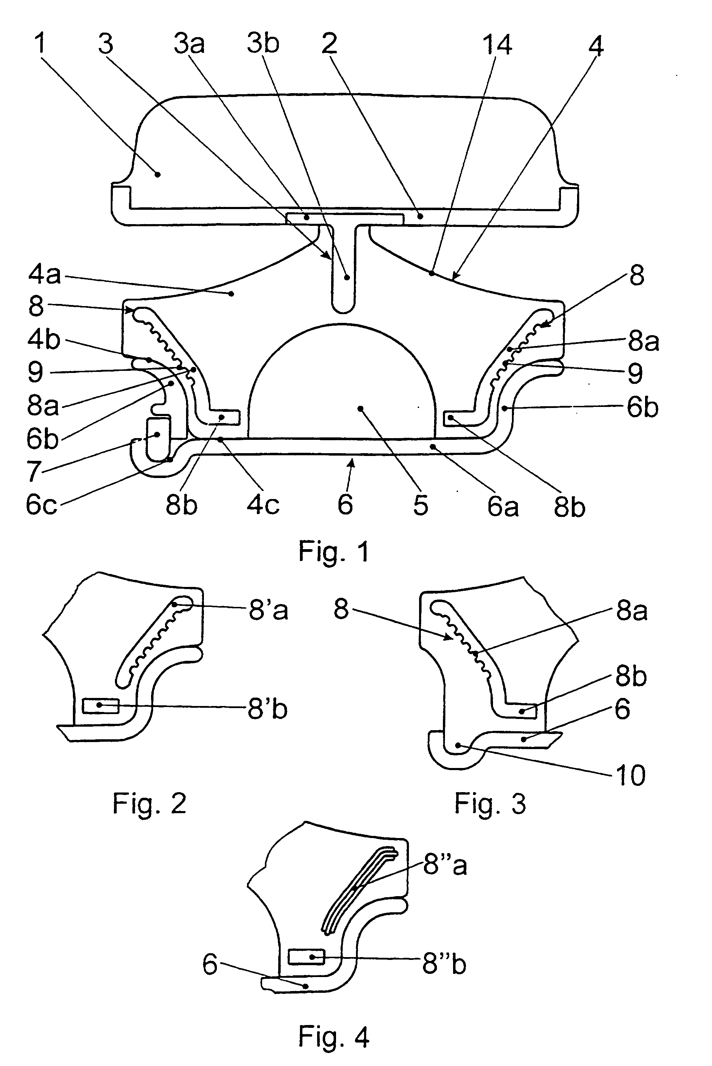

Wie **Fig. 1** zeigt ist der Reifen gemäß der gegenständlichen Erfindung ein nicht-pneumatischer Reifen und ist auf einer Felge 6 montiert dargestellt. Die Felge 6 ist bei der dargestellten Ausführungsform eine für Gabelstapler und ähnliche Fahrzeuge übliche Standardfelge, die einen zylindrischen Mittelteil 6a aufweist, an welchen auf der einen Seite ein Felgenhorn 6b und auf der anderen Seite eine durch den radial nach innen gebogenen Endbereich gebildete Nut 6c anschließt. Das zweite Felgenhorn wird durch einen Hornring 6'b, der von einem Verschlussring 7 gesichert wird, gebildet. Der Reifen weist ein aus Gummi bestehendes und gegebenenfalls mit einem Profil versehenes Laufflächenteil 1 auf, welches an der Außenseite eines zylindrisch geformten Zwischenringes 2 aus Metall, insbesondere aus Stahl, oder auch aus Kunststoff angeordnet ist. Das Laufflächenteil 1 ist mit dem Zwischenring 2 durch Vulkanisieren verbunden. Die Randbereiche des Zwischenringes 2 sind in radialer Richtung nach außen gebogen, um einen sicheren Sitz des Laufflächenteils 1 am Zwischenring 2 zu unterstützen und um einen Schutz vor Anfahrverletzungen zu bieten.

An der Innenseite des Zwischenringes 2 ist entlang der Äquatorlinie ein im Querschnitt T-förmiger Verbindungsring 3 in eine umlaufende, das Querteil 3a des T-förmigen Verbindungsringes 3 aufnehmende Ausnehmung 3a eingesetzt und mit dem Zwischenring 2 fest verbunden. Über dem Verbindungsring 3 wird eine Verbindung des mit dem Laufflächenteil 1 versehenen Zwischenringes 2 zu einem bezüglich der Äquatorebene des Reifens symmetrisch gestalteten Federelement 4 hergestellt. Das Federelement 4 ist ein Gummi- oder Polyurethanteil. Der Verbindungsring 3 ist im Federelement 4 einvulkanisiert und mit dem Zwischenring 2, beispielsweise formschlüssig durch Presssitz oder durch Kleben, verbunden. Das Laufflächenteil 1 kann gemeinsam mit dem Zwischenring 2 bei Bedarf ausgewechselt werden.

Radial innerhalb des Mittelstegs 3b des Verbindungsringes 3 ist das Federelement 4 mit einer relativ großvolumigen mittigen Ausnehmung 5 mit tunnelähnlichem Querschnitt versehen. Über den Verbindungsring 3 ist das Federelement 4 in seinem mittigen Bereich mit dem Zwischenring 2 in Verbindung. Seitlich dieses mittigen Bereiches schließen Schulterbereiche 14 an, die vorerst kurz in radialer Richtung und anschließend leicht bogenförmig gekrümmt axial nach außen bis auf die Höhe der Ränder des Zwischenringes 2 verlaufen. Das Federelement 4 erstreckt sich somit in axialer Richtung etwa soweit wie das Laufflächenteil 1, wobei der Abstand zwischen dem Federelement 4 und dem Zwischenring 2 nach außen zu größer wird. Der außenseitig vorliegende größte Abstand zwischen dem Federelement 4 und dem Zwischenring 2 entspricht dem möglichen freien Federweg A des Zwischenringes 2. An die mittige Ausnehmung 5 schließt beidseitig je eine mit der Felge 6 in Kontakt tretende Felgensitzfläche an, die hier etwa gleich lang ausgeführt ist wie die an die Schulterbereiche 14 anschließende und in radialer Richtung zur Felge 6 verlaufende Seitenfläche 4d. Zwischen den Seitenflächen 4d und den erwähnten Felgensitzflächen 4c ist das Federelement 4 mit weiteren mit der Felge 6 im Bereich des Felgenhorns 6b bzw. des Hornringes 6'b in Kontakt tretenden Hornsitzflächen 4b versehen, deren Außenkonturen somit mit der Innenkontur des Felgenhorns 6b bzw. des Hornringes 6'b der Felge 6 korrespondierend ausgebildet sind.

Seine größte Querschnittbreite weist jedes Seitenteil 4a des Federelements 4 in seinem dem Felgenhorn 6b bzw. dem Hornring 6'b benachbarten Bereich auf. In diesen Bereichen der Seitenteile 4a ist jeweils ein Kernring 8 untergebracht, welcher bei der Herstellung des Federelements 4 einvulkanisiert wird. Jeder Kernring 8 besteht bei der in Fig. 1 gezeigten Ausführungsform aus einem im Querschnitt länglich gestalteten und gegenüber der radialen Richtung schräg nach außen geneigten Stützelement 8a und einem mit diesem einteilig ausgeführten Kernelement 8b. Die Kernelemente 8b verlaufen dabei in unmittelbarer Nähe und parallel zu den Felgensitzflächen 4c und somit in axialer Richtung.

Die Kernelemente 8b haben die Funktion der von Luftreifen her bekannten Wulstkerne, sie sichern daher den Reifen in radialer Richtung auf der Felge 6 und verhindern ein unbeabsichtigtes Lösen des Reifens von der Felge 6.

Der Winkel, den die Stützelemente 8a mit der radialen Richtung über einen Großteil ihrer Erstreckung einschließen, ist insofern von Bedeutung, als dadurch das Einfederungsverhalten des Reifens mitbestimmt wird. Auch die Länge des Stützelements 8a ist in diesem Zusammenhang von Bedeutung. Je kleiner der genannte Winkel ist, also je steiler das Stützelement 8a angeordnet ist und je länger es ausgeführt ist, umso härter ist das Federelement 4. Durch ein flacher orientiertes und/oder kürzer ausgeführtes Stützelement 8a wird das Federungsverhalten des Federelements 4 weicher. Im Allgemeinen kann davon ausgegangen werden, dass die Lage des Stützelements innerhalb des Federelements 4 so gewählt wird, dass der Winkel, den dieses gegenüber der radialen Richtung einnimmt, zwischen 20° und 60° beträgt. Bei der dargestellten Ausführungsform beträgt der Winkel ca. 30°.

An seiner Außenseite, demnach an seiner dem Felgenhorn 6b bzw. dem Hornring 6'b zugewandten Seite, ist jedes Stützelement 8a mit einer Anzahl von in seiner Umfangsrichtung verlaufenden Rillen 9 versehen. Diese verleihen dem Stützelement 8c eine gerippte Struktur, wodurch das Stützelement 8a biegefreudiger wird. Damit wird auch das Federungsverhalten des Federelements 4 beeinflusst, sodass der Fahrkomfort des Reifens verbessert wird. Bei der in Fig. 1 dargestellten Ausführungsform ist ferner durch die einteilige Ausführung des Kernelements 8b mit dem Stützelement 8a das Kernelement 8b in seiner Lage stabilisiert, was ebenfalls eine Maßnahme ist, die den Fahrkomfort erhöht.

**Fig. 2** zeigt eine Ausführungsform, bei der alternativ zu einer einteiligen Ausführung vorgesehen ist, das Stützelement 8'a getrennt vom Kernelement 8'b auszuführen. Ansonsten entspricht die Ausführung des Stützelements 8'a und des Kernelements 8'b grundsätzlich jener gemäß Fig. 1.

**Fig. 3** zeigt eine Ausführungsform, bei der der Reifen mit einem am Federelement 4 geformten SIT-Haltewulst (Snap-In-Tyre-Haltewulst) 10 versehen ist, welcher somit aus dem Gummimaterial des Federelements 4 gebildet ist. Der Haltewulst 10 greift in die auf der Felge 6 ausgebildete Nut 6c ein. Reifen mit SIT-Haltewülsten sind aus dem Stand der Technik grundsätzlich bekannt.

Eine Ausführungsform, bei der das Stützelement 8"a aus mehreren Lagen Stahlkord besteht, zeigt **Fig. 4.** Auch hier ist das Stützelement 8"a vom Kernelement 8'b getrennt. Die Anordnung des Stützelements 8"a und des Kernelements 8"b entspricht dabei grundsätzlich jener gemäß Fig. 2.

Die Kernringe 8 bzw. die Kernelemente 8b, 8'b, 8"b und die Stützelemente 8a, 8'a können aus Metall und/oder aus Kunststoff bestehen.

Die mittige Ausnehmung 5 im Federelement 4 reduziert im Inneren des Reifens die Temperaturentwicklung während des Fahrbetriebes im diesbezüglich kritischen mittigen Bereich des Federelements 4. Die Federkennlinie des Federelements 4 ist durch dessen erfindungsgemäße Ausgestaltung in zwei definierte Phasen unterteilt. In der ersten Phase - entsprechend dem Federweg A - ist die Kennlinie ähnlich dem eines Luftreifens, in der zweiten Phase - wenn der Federweg A ausgeschöpft ist - ist die Kennlinie stark progressiv steigend. Dies bedeutet, dass bei Leerfahrten sowie bei Fahrten mit niedrigen bis mittelschweren Lasten der Federungskomfort des erfindungsgemäßen Reifens ähnlich zu jenem eines Luftreifens ist. Bei einer starken Belastung erhöht sich durch die Begrenzung des freien Federweges und durch die stark progressiv ansteigende Federkennlinie die Kippstabilität des Fahrzeugs, was für die Sicherheit von Bedeutung ist. Durch die Stützelemente bzw. die Kernringe werden die axiale Verformung des Federelements 4 und die mit dieser einhergehende Walkarbeit und die Wärmegenerierung reduziert. Die Lebensdauer erfindungsgemäßer Reifen ist daher durch die erzielbare Verbesserung der strukturellen Haltbarkeit höher als jene herkömmlicher Reifen. Erfindungsgemäße Reifen weisen auch einen gegenüber herkömmlich ausgeführter Reifen geringeren Rollwiderstand auf, was sich auf den Energieverbrauch der Fahrzeuge, die mit solchen Reifen ausgerüstet sind, auswirkt.

Bei in axialer Richtung auftretenden Kräften wirkt ein Teilbereich des Federelements 4 als Druckfeder, ein anderer Teilbereich als Zugfeder. Die auftretenden Kräfte - statische und dynamische - können durch unterschiedliche Ausgestaltungen des Federelements 4 gezielt abgebaut werden. Durch die geometrische Gestalt und die Anordnung der an den Stützelementen umlaufenden Rillen kann ferner gezielt Einfluss auf die Biegesteifigkeit desselben und damit auf die Federkennlinie des Federelements 4 genommen werden.

Da das Federelement 4 fast auf dem gesamten Umfang gleichzeitig ein- oder ausfedert, findet eine effektivere Materialausnützung als bei herkömmlichen Vollgummireifen statt. Daher kann mit geringeren Elastomermengen das Auslangen gefunden werden. Ein weiterer Vorteil der gewählten Geometrie ergibt sich dadurch, dass Gummi bei Schubbeanspruchung viel weicher als bei Druckbeanspruchung federt.

Abweichend von den dargestellten Ausführungsformen können auch an der Innenseite oder auch auf der Innen- und der Außenseite der Stützelemente Rillen mit übereinstimmender oder unterschiedlicher Geometrie vorgesehen werden. Selbstverständlich ist auch eine Ausführung der Erfindung möglich, wo die Stützelemente keine Rillen aufweisen.

## Patentansprüche

1. Nicht-pneumatischer Reifen mit einem formstabilen Zwischenring, auf dessen Außenseite ein Laufflächenteil aus einem gummielastischen Material und an dessen Innenseite ein zur Anordnung auf einer Felgenhörner oder dergleichen aufweisenden Felge bestimmtes Federelement, welches ebenfalls aus einem gummielastischen Material besteht, angeordnet ist,
**dadurch gekennzeichnet,**
**dass** das Federelement (4) am Zwischenring (2) lediglich mit seinem mittleren Bereich befestigt ist, an welchen seitlich Schulterbereiche (14) anschließen, deren Abstand vom Zwischenring (2) nach außen zu größer wird, sodass ein freier Federweg (A) für den mit dem Laufflächenteil (1) versehenen Zwischenring (2) zur Verfügung gestellt wird, dass das Federelement (4) an seiner Innenseite mittig mit einer radial außerhalb seiner Felgensitzflächen (4c) angeordneten und im Querschnitt tunnelförmigen Ausnehmung (5) versehen ist, deren größte radiale Erstreckung zumindest dem freien Federweg (A) entspricht, und dass im Federelement (4) zur radialen Fixierung des Reifens auf der Felge (6) ringartig umlaufende Kernelemente (8b, 8'b, 8"b) und in den beiden felgenhornnahen Bereichen je ein gegenüber der radialen Richtung schräg nach außen geneigt verlaufendes, länglich ausgeführtes und ringartig umlaufendes Stützelement (8a, 8'a, 8"a) angeordnet ist.

2. Reifen nach Anspruch 1, **dadurch gekennzeichnet, dass** das Federelement (4) über einen Verbindungsring (3), welcher insbesondere einen T-förmigen Querschnitt aufweist, am Zwischenring (2) angeordnet ist.

3. Reifen nach Anspruch 2, **dadurch gekennzeichnet, dass** der Verbindungsring (3) großteils innerhalb des Federelements (4) angeordnet ist und das Querteil (3a) des T-förmigen Verbindungsringes (3) mit dem Zwischenring (2), insbesondere formschlüssig, verbunden ist.

4. Reifen nach einem der Ansprüche 1 bis 3, **dadurch gekennzeichnet, dass** das Federelement (4) an die Schulterbereiche (14) anschließende Seitenflächen (4d) und an die mittige Ausnehmung (5) anschließende Felgensitzflächen (4c) aufweist, wobei zwischen den Seitenflächen (4d) und den Felgensitzflächen (4c) jeweils eine dem Felgenhorn (6b, 6'b) der Felge (6) angepasste Hornsitzfläche (4b) ausgebildet ist.

5. Reifen nach einem der Ansprüche 1 bis 4, **dadurch gekennzeichnet, dass** die Stützelemente (8a, 8'a, 8"a) in der Nähe der Hornsitzflächen (4b) angeordnet sind.

6. Reifen nach einem der Ansprüche 1 bis 5, **dadurch gekennzeichnet, dass** die Kernelemente (8b, 8'b, 8"b) in der Nähe der Felgensitzflächen (4c) verlaufen.

7. Reifen nach einem der Ansprüche 1 bis 6, **dadurch gekennzeichnet, dass** das Kernelement (8b) mit dem Stützelement (8a) einen einteilig ausgeführten Kernring (8) bildet.

8. Reifen nach einem der Ansprüche 1 bis 7, **dadurch gekennzeichnet, dass** die Stützelemente (8a, 8'a, 8"a) im Querschnitt lang gestreckt ausgebildet sind.

9. Reifen nach einem der Ansprüche 1 bis 8, **dadurch gekennzeichnet, dass** zumindest die Außenseiten der Stützelemente (8a, 8'a) mit einer Anzahl umlaufender Rillen (9) versehen ist.

10. Reifen nach einem der Ansprüche 1 bis 8, **dadurch gekennzeichnet, dass** das Stützelement (8"a) aus einer Anzahl von Lagen aus Stahlkord besteht.

11. Reifen nach einem der Ansprüche 1 bis 10, **dadurch gekennzeichnet, dass** die Kernelemente (8b, 8'b, 8"b) einen flach rechteckförmigen Querschnitt aufweisen.

12. Fahrzeugrad bestehend aus einem nicht-pneumatischen Reifen gemäß einem der Ansprüche 1 bis 11 und einer Felge, insbesondere einer Standardfelge für Gabelstapler und ähnliche Fahrzeuge.

13. Fahrzeugrad nach Anspruch 12, **dadurch gekennzeichnet, dass** das Federelement (4) einen Snap-In-Tyre-Haltewulst (10), welcher in einer an der Felge (6) umlaufenden Nut (6c) eingreift, aufweist.

## Claims

1. Non-pneumatic tyre with a dimensionally stable intermediate ring, on the outer side of which there is arranged a tread part of an elastomeric material and on the inner side of which there is arranged a spring element, which is intended for arranging on a rim having rim horns or the like and likewise consists of an elastomeric material, **characterized in that** the spring element (4) is fastened on the intermediate ring (2) merely with its central region, which is laterally adjoined by shoulder regions (14), the distance of which from the intermediate ring (2) becomes greater towards the outside, so that a free range of spring (A) is made available for the intermediate ring (2) provided with the tread part (1), **in that** the spring element (4) is provided centrally on its inner side with a recess (5), which is arranged radially outside its rim seating surfaces (4c), is tunnel-shaped in cross section and the greatest radial extent of which corresponds at least to the free range of spring (A), and **in that** annular core elements (8b, 8'b, 8''b) are arranged in the spring element (4) for the radial fixing of the tyre on the rim (6) and an elongated and annular supporting element (8a, 8'a, 8''a), sloping obliquely outwards with respect to the radial direction, is arranged in each of the two regions near the horns of the rim.

2. Tyre according to Claim 1, **characterized in that** the spring element (4) is arranged on the intermediate ring (2) by means of a connecting ring (3), which has in particular a T-shaped cross section.

3. Tyre according to Claim 2, **characterized in that** the connecting ring (3) is arranged for the most part inside the spring element (4) and the transverse part (3a) of the T-shaped connecting ring (3) is connected to the intermediate ring (2), in particular with a form fit.

4. Tyre according to one of Claims 1 to 3, **characterized in that** the spring element (4) has side surfaces (4d) adjoining the shoulder regions (14) and rim seating surfaces (4c) adjoining the central recess (5), a horn seating surface (4b) adapted to the rim horn (6b, 6'b) of the rim (6) being respectively formed between the side surfaces (4d) and the rim seating surfaces (4c).

5. Tyre according to one of Claims 1 to 4, **characterized in that** the supporting elements (8a, 8'a, 8''a) are arranged in the vicinity of the horn seating surfaces (4b).

6. Tyre according to one of Claims 1 to 5, **characterized in that** the core elements (8b, 8'b, 8''b) extend in the vicinity of the rim seating surfaces (4c).

7. Tyre according to one of Claims 1 to 6, **characterized in that** the core element (8b) forms with the supporting element (8a) a one-part core ring (8).

8. Tyre according to one of Claims 1 to 7, **characterized in that** the supporting elements (8a, 8'a, 8''a) are formed such that they are elongated in cross section.

9. Tyre according to one of Claims 1 to 8, **characterized in that** at least the outer sides of the supporting elements (8a, 8'a) are provided with a number of peripheral channels (9).

10. Tyre according to one of Claims 1 to 8, **characterized in that** the supporting element (8''a) comprises a number of layers of steel cord.

11. Tyre according to one of Claims 1 to 10, **characterized in that** the core elements (8b, 8'b, 8''b) have a flat-rectangular cross section.

12. Vehicle wheel comprising a non-pneumatic tyre according to one of Claims 1 to 11 and a rim, in particular a standard rim, for forklift trucks and similar vehicles.

13. Vehicle wheel according to Claim 12, **characterized in that** the spring element (4) has a snap-in tyre retaining bead (10), which engages in a groove (6c) running around the rim (6).

## Revendications

1. Bandage non pneumatique, qui présente un anneau intermédiaire de forme stable sur le côté extérieur duquel est agencée une pièce de surface de roulement constituée d'un matériau élastique et sur le côté intérieur duquel est agencé un élément élastique qui est destiné à être agencé sur une jante dotée de rebords relevés de jante ou similaires et qui est également constitué d'un matériau élastique, **caractérisé en ce que** l'élément élastique (4) n'est fixé sur l'anneau intermédiaire (2) que par sa région médiane à laquelle sont latéralement connectées des régions d'épaulement (14) dont la distance par rapport à l'anneau intermédiaire (2) augmente vers l'extérieur de façon à mettre un trajet élastique libre (A) à disposition de l'anneau intermédiaire (2) muni de la pièce (1) de surface de roulement, **en ce que** l'élément élastique (4) est muni au milieu de son côté intérieur d'un évidement (5) qui est agencé radialement à l'extérieur de sa surface (4c) de pose sur la jante, dont la section transversale a la forme d'un tunnel et dont l'étendue radiale la plus grande correspond au moins à celle du trajet élastique libre (A) et **en ce qu'**en vue de la fixation radiale du bandage sur la jante (6), des éléments d'âme (8b, 8'b, 8''b) qui s'étendent périphériquement en anneau sont agencés dans l'élément élastique (4), un élément d'appui (8a, 8'a, 8''a) qui est agencé en anneau périphérique et qui s'étend obliquement vers l'extérieur par rapport à la direction radiale étant agencé dans chacune des deux régions proches du rebord relevé de la jante.

2. Bandage selon la revendication 1, **caractérisé en ce que** l'élément élastique (4) est agencé sur l'anneau intermédiaire (2) par l'intermédiaire d'un anneau de liaison (3) qui présente en particulier une section transversale en forme de T.

3. Bandage selon la revendication 2, **caractérisé en ce que** la plus grande partie de l'anneau de liaison (3) est agencée dans l'élément élastique (4) et **en ce que** la branche transversale (3a) de l'anneau de liaison (3) en forme de T est reliée en particulier en correspondance de forme à l'anneau intermédiaire (2).

4. Bandage selon l'une des revendications 1 à 3, **caractérisé en ce que** l'élément élastique (4) présente des surfaces latérales (4d) adjacentes aux régions d'épaulement (14) et des surfaces (4c) de pose sur la jante adjacentes à l'évidement médian (5), une surface (4b) de pose sur le rebord relevé, adaptée aux rebords relevés (6b, 6'b) de la jante (6), étant formée de chaque côté entre la surface latérale (4d) et la surface (4c) de pose sur la jante.

5. Bandage selon l'une des revendications 1 à 4, **caractérisé en ce que** les éléments d'appui (8a, 8'a, 8''a) sont agencés à proximité des surfaces (4b) de pose sur le rebord relevé.

6. Bandage selon l'une des revendications 1 à 5, **caractérisé en ce que** les éléments (8b, 8'b, 8''b) d'âme s'étendent à proximité des surfaces (4c) de pose sur la jante.

7. Bandage selon l'une des revendications 1 à 6, **caractérisé en ce que** l'élément d'âme (8b) forme avec l'élément (8a) d'appui un anneau d'âme (8) réalisé en une pièce.

8. Bandage selon l'une des revendications 1 à 7, **caractérisé en ce que** les éléments d'appui (8a, 8'a, 8''a) ont une section transversale allongée.

9. Bandage selon l'une des revendications 1 à 8, **caractérisé en ce qu'**au moins le côté extérieur des éléments d'appui (8a, 8'a) présente plusieurs rainures périphériques (9).

10. Bandage selon l'une des revendications 1 à 8, **caractérisé en ce que** l'élément d'appui (8''a) est constitué de plusieurs couches de câble d'acier.

11. Bandage selon l'une des revendications 1 à 10, **caractérisé en ce que** les éléments d'âme (8b, 8'b, 8''b) ont une section transversale en forme de rectangle plan.

12. Roue de véhicule automobile constituée d'un bandage non pneumatique selon l'une des revendications 1 à 11 et d'une jante et en particulier d'une jante standard pour élévateur à fourche ou pour des véhicules similaires.

13. Roue de véhicule automobile selon la revendication 12, **caractérisé en ce que** l'élément élastique (4) présente un renflement (10) de maintien du pneu par encliquetage, qui s'engage dans une rainure périphérique (6c) située sur la jante (6).
